# EUROPEAN PATENT APPLICATION

(11) **EP 3 173 732 A1**
(43) Date of publication of application: **31.05.2017**
(21) Application number: 16200453.5
(22) Date of filing: 24.11.2016
(51) Int. Cl.: G01B 11/16, G01B 11/24

(54) **SYSTEMS AND METHODS FOR MONITORING COMPONENT STRAIN**

(30) Priority: 25.11.2015 US 201514951669
(71) Applicant: General Electric Company, Schenectady, NY 12345 (US)
(72) Inventor: GERMANN, Bryan Joseph, Greenville, SC South Carolina 29615 (US); HOVIS, Gregory Lee, Greenville, SC South Carolina 29615 (US); SALM, Jacob Andrew, Greenville, SC South Carolina 29615 (US)
(74) Representative: Pöpper, Evamaria

(57) **Abstract**

A system (23) for monitoring a component (10) is provided. The system (23) includes a plurality of fiducial markers (12), an optical scanner (24) for analyzing the fiducial markers (12), and a processor (24). The plurality of fiducial markers (12) may be on an exterior surface (14) of the component (10). The processor (24) may be in operable communication with the optical scanner (24) and operable for measuring the fiducial markers (12) along an X-axis, a Y-axis, and a Z-axis to obtain an X-axis data point set, a Y-axis data point set, and a Z-axis data point set. The X-axis, the Y-axis, and the Z-axis are mutually orthogonal. Methods of using the system (23) are also provided.

## Description

### FIELD OF THE INVENTION

The present disclosure relates generally to systems and methods for monitoring component strain, and more particularly to systems and methods which scan and measure a plurality of fiducial markers positioned on the component.

### BACKGROUND OF THE INVENTION

Throughout various industrial applications, apparatus components are subjected to numerous extreme conditions (e.g., high temperatures, high pressures, large stress loads, etc.). Over time, an apparatus's individual components may suffer creep and/or deformation that may reduce the component's usable life. Such concerns might apply, for instance, to some turbomachines.

Turbomachines are widely utilized in fields such as power generation and aircraft engines. For example, a conventional gas turbine system includes a compressor section, a combustor section, and at least one turbine section. The compressor section is configured to compress air as the air flows through the compressor section. The air is then flowed from the compressor section to the combustor section, where it is mixed with fuel and combusted, generating a hot gas flow. The hot gas flow is provided to the turbine section, which utilizes the hot gas flow by extracting energy from it to power the compressor, an electrical generator, and other various loads.

During operation of a turbomachine, various components within the turbomachine and particularly within the turbine section of the turbomachine, such as turbine blades, may be subject to creep due to high temperatures and stresses. For turbine blades, creep may cause portions of or the entire blade to elongate so that the blade tips contact a stationary structure, for example a turbine casing, and potentially cause unwanted vibrations and/or reduced performance during operation.

Accordingly, components might be monitored for creep. One approach to monitoring components for creep is to configure strain sensors on the components, and analyze the strain sensors at various intervals to monitor for deformations associated with creep strain. However, such deformation must generally be monitored at the strain sensor. Movements of the strain sensor might occur independent or in excess of the components. Moreover, the strain sensor itself might become damaged or difficult to monitor over time.

Accordingly, alternative systems and methods for monitoring component strain are desired in the art. In particular, systems and methods that do not require a discrete strain sensor to be configured on the component would be advantageous.

### BRIEF DESCRIPTION OF THE INVENTION

Aspects and advantages of the invention will be set forth in part in the following description, or may be obvious from the description, or may be learned through practice of the invention.

In accordance with one embodiment of the present disclosure, a system for monitoring a component is provided. The system includes a plurality of fiducial markers, an optical scanner for analyzing the fiducial markers, and a processor. The plurality of fiducial markers may be on an exterior surface of the component. The processor may be in operable communication with the optical scanner and operable for measuring the fiducial markers along an X-axis, a Y-axis, and a Z-axis to obtain an X-axis data point set, a Y-axis data point set, and a Z-axis data point set. The X-axis, the Y-axis, and the Z-axis are mutually orthogonal.

In accordance with another embodiment of the present disclosure, a method for monitoring a component is provided. The method includes optically scanning a plurality of fiducial markers positioned on an exterior surface of the component, and measuring the fiducial markers along an X-axis, a Y-axis, and a Z-axis. The measuring may obtain a first X-axis data point set, a second Y-axis data point set, and a second Z-axis data point set, wherein the X-axis, the Y-axis, and the Z-axis are mutually orthogonal.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 is a perspective view of an exemplary component including a plurality of fiducial markers in accordance with one or more embodiments of the present disclosure;
FIG. 2 is a perspective view of a system for monitoring component strain in accordance with one or more embodiments of the present disclosure;
FIG. 3 is an overhead view of a plurality of fiducial markers in accordance with one or more embodiments of the present disclosure;
FIG. 4 is an overhead view of a plurality of fiducial markers in accordance with one or more embodiments of the present disclosure;
FIG. 5 is a perspective view of a system for monitoring component strain in accordance with one or more embodiments of the present disclosure;
FIG. 6 is a perspective view of a system for monitoring component strain in accordance with one or more embodiments of the present disclosure;
FIG. 7 is a flow chart illustrating a method for monitoring component deformation in accordance with one or more embodiments of the present disclosure; and
FIG. 8 is a flow chart illustrating a method for monitoring component deformation in accordance with one or more embodiments of the present disclosure.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

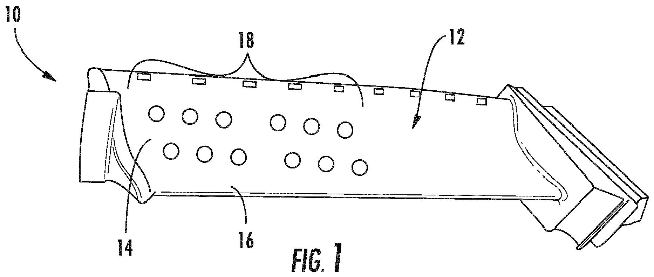

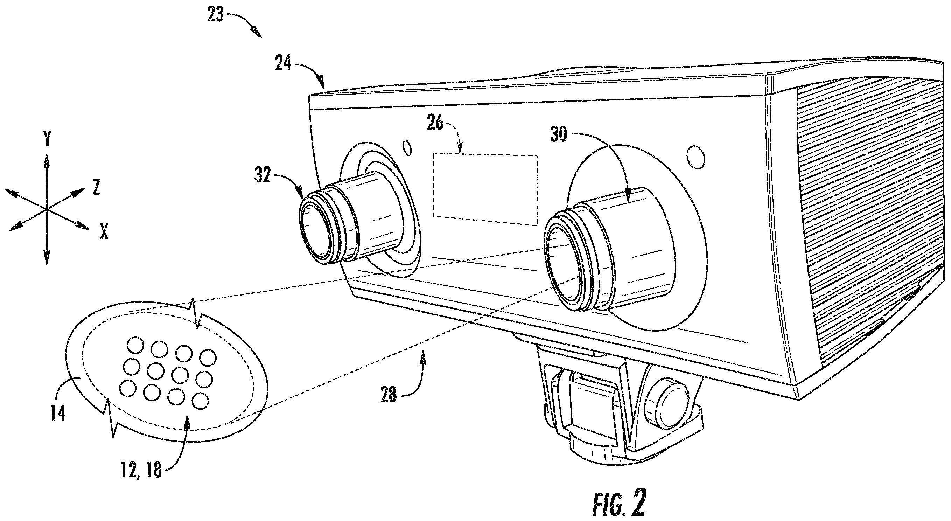

Referring to FIG. 1 and 2, a component 10 is illustrated with a plurality of fiducial markers 12 positioned on the component's exterior surface 14. The component 10 (and more specifically the substrate 11 of the overall component 10) can comprise a variety of types of components used in a variety of different applications, such as, for example, components utilized in high temperature applications (e.g., components comprising nickel or cobalt based superalloys). In some embodiments, the component 10 may comprise an industrial gas turbine or steam turbine component such as a combustion component or hot gas path component. In some embodiments, the component 10 may comprise a turbine blade, compressor blade, vane, nozzle, shroud, rotor, transition piece or casing. In other embodiments, the component 10 may comprise any other component of a turbine such as any other component for a gas turbine, steam turbine or the like. In some embodiments, the component may comprise a non-turbine component including, but not limited to, automotive components (e.g., cars, trucks, etc.), aerospace components (e.g., airplanes, helicopters, space shuttles, aluminum parts, etc.), locomotive or rail components (e.g., trains, train tracks, etc.), structural, infrastructure or civil engineering components (e.g., bridges, buildings, construction equipment, etc.), and/or power plant or chemical processing components (e.g., pipes used in high temperature applications).

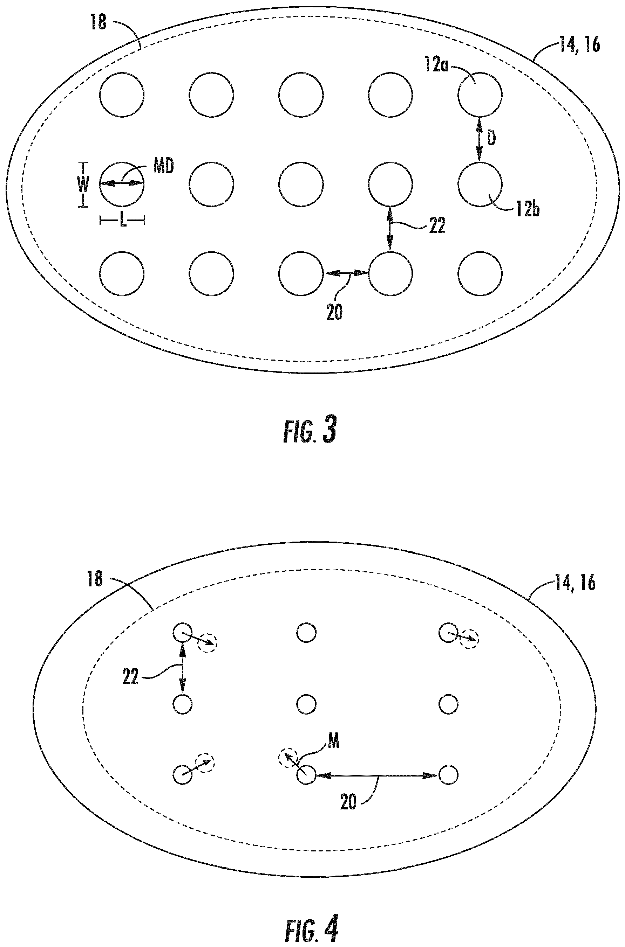

The component 10 has an exterior surface 14 on which the fiducial markers 12 are positioned. The example component 10 embodiment shown in FIG. 1 comprises a turbine component including a turbine blade. However, the component 10 can include various additional or alternative components, as described above. The fiducial markers 12 are generally identifiable targets having a length L and width W (see FIG. 3) across the exterior surface 14. Certain fiducial marker 12 embodiments may further include a thickness relative to the exterior surface 14, thereby forming an elevated marker surface. The markers 12 may be applied to the exterior surface 14 by one or more printing methods. For instance, the markers 12 may be printed on the exterior surface 14 of the component 10 by direct ceramic inkjet printing, aerosol jet printing, or another suitable method. In additional or alternative embodiments, the fiducial markers 12 may be applied with and/or positioned in an optional ceramic thermal barrier layer. The direct application of fiducial markers 12 on the component 10 may increase durability and reduce the risk that an optical scanner will be unable to measure the markers 12 over time. In some fiducial marker 12 embodiments, each marker 12 will comprise a yttria-stabilized zirconia (YSZ). Moreover, in embodiments wherein the fiducial markers 12 are positioned in a thermal barrier coating 16, the thermal barrier coating 16 may comprise a portion that is visually-distinct and optically contrasting from the fiducial markers 12. For instance, in an exemplary embodiment, the thermal barrier coating 16 may be formed to have a substantially black color while each marker 12 has a substantially white color.

In additional or alternative embodiments, the fiducial markers 12 may be formed from nanospherical elements disposed or printed on the exterior surface 14. The nanospherical elements may each include a generally spherical body, not exceeding 5000 nanometers. In some such embodiments, each fiducial marker 12 includes one or more nanospherical elements and each nanospherical element includes a set diameter. In optional embodiments, the set diameter of the nanospherical elements is between 100 nanometers and 1000 nanometers.

Referring now to FIGS. 1 through 4, the fiducial markers 12 are positioned on a portion of the exterior surface 14 of the component 10. The fiducial markers 12 generally comprise at least two discrete markers (e.g., 12a and 12b) that can be used to measure a distance D between said at least two markers 12a and 12b. As should be appreciated to those skilled in the art, these measurements can help determine the amount of strain, strain rate, creep, fatigue, stress, etc. at that region of the component 10. The at least two discrete markers 12a and 12b can be disposed at a variety of distances and in a variety of locations depending on the specific component 10 so long as the distance D there between can be measured. Optionally, the fiducial markers 12 may be positioned in a predetermined reference pattern 18. For example, the fiducial markers 12 may be arranged as matrix grid across a defined portion of the exterior surface 14 of the component 10, as illustrated in FIGS. 3 and 4. The matrix grid may include a preselected column spacing 20 and a preselected row spacing 22 to define the distance D between each adjacent marker 12. Moreover, multiple components, or portions of components, may include individualized predetermined reference patterns 18. In other words, the predetermined reference pattern 18 of one component 10 or portion may be distinguishable and different from the predetermined reference pattern 18 of another component 10 or portion. This may allow discrete components and/or portions to be identified and tracked throughout the life of the component 10.

The fiducial markers 12 may comprise dots, lines, circles, rectangles or any other geometrical or non-geometrical shape, so long as they are consistently identifiable and may be used to measure the distance D therebetween. The fiducial markers 12 may form a variety of different configurations and cross-sections such as by incorporating a variety of differently shaped, sized, and positioned fiducial markers 12. For instance, each fiducial marker 12 may include a matched or unique shape. In some embodiments, each marker 12 may define a circular shape, rectangular shape, or linear shape that is the same (i.e., matched) or unique from another fiducial marker. As shown, one exemplary embodiment of the fiducial markers 12 includes a matched shape that is a circle having a single marker diameter MD. The marker diameter of some embodiments may be less than 1 foot. The marker diameter of certain embodiments may be between approximately 5 micrometers and approximately 5 millimeters.

The fiducial markers 12 may thereby be positioned in one or more of a variety of locations of various components. For example, as discussed above, the fiducial markers 12 may be positioned on a turbine blade, vane, nozzle, shroud, rotor, transition piece or casing. In such embodiments, the fiducial markers 12 may be configured in one or more locations known to experience various forces during unit operation such as on or proximate airfoils, platforms, tips or any other suitable location. Moreover, the fiducial markers 12 may be deposited in one or more locations known to experience elevated temperatures. For example the fiducial markers 12 may be positioned in a hot gas path and/or on a combustion component 10. Some embodiments may include fiducial markers 12 positioned in a pattern that substantially cover the entire exterior surface 14 of a component 10. Such embodiments may permit the optional detection of local strain across selective variable sub-portions (e.g., the region between two adjacent markers 12), and/or detection of global strain across the component 10.

Referring now to FIGS. 2 through 6, various embodiments of systems for monitoring component deformation are provided. Such systems in accordance with the present disclosure may facilitate improved local and/or global strain analysis by measuring fiducial markers 12 along three axes (conventionally termed as an X-axis, Y-axis and Z-axis and which are mutually orthogonal). Movements M of the fiducial markers 12 may be tracked in each plane as the system 23 measures the relative displacement of each marker, and thereby the deformation of the component 10, as illustrated in FIG. 4. In addition, in embodiments including a predetermined reference pattern 18, measured pre-use deviations from the predetermined reference pattern 18 may be observed or detected as indicia of faults in the component and/or component manufacturing process.

Certain systems and methods in accordance with the present disclosure may utilize surface metrology techniques to obtain measurements of fiducial markers 12 along three axes. In particular, non-contact surface metrology techniques may be utilized in exemplary embodiments. Because measurements along three axes can be performed in accordance with some embodiments, inferred measurements along an axis based on contrast in two-dimensional images may not be required.

The system 23 may include, for example, a plurality of fiducial markers 12 which are positioned on the exterior surface 14 of one or more components as discussed above. Further, system 23 may include an optical scanner 24 for analyzing the fiducial markers 12, and a processor 26 in operable communication with the optical scanner 24.

In general, as used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. The processor 26 may also include various input/output channels for receiving inputs from and sending control signals to various other components with which the processor 26 is in communication, such as the optical scanner 24. The processor 26 may further include suitable hardware and/or software for storing and analyzing inputs and data from the optical scanner 24, and for generally performing method steps as described herein.

Notably, processor 26 (or components thereof) may be integrated within the optical scanner 24. In additional or alternative embodiments, the processor 26 (or components thereof) may be separate from the optical scanner 24. In exemplary embodiments, for example, processor 26 includes components that are integrated within the optical scanner 24 for initially processing data received by the optical scanner 24, and components that are separate from the optical scanner 24 for measuring the fiducial markers 12 and/or assembling contemporary three-dimensional profiles from the data and comparing these profiles.

In general, processor 26 is operable for measuring the fiducial markers 12 along an X-axis, a Y-axis and a Z-axis to obtain X-axis data points, Y-axis data points, and Z-axis data points. As discussed, the axes are mutually orthogonal. The X-axis data points, Y-axis data points, and Z-axis data points are dimensional data points related to the measurement of the fiducial markers 12. For example, the data points may indicate the location of the surface in one or more axes relative to a reference surface, such as the exterior surface 14 of the component 10, or relative to each other.

The data points measured at a chosen time, or associated with a certain profile, collectively form a data point set. For example, X-axis data points measured at a first time form an X-axis data point set. Data points measured at the first time may also form a Y-axis data point set and a Z-axis data point set. Some data points may be collected by the processor 26 and organized as data point sets. Additional or alternative data point sets may be provided to the processor 26 from a discrete source or memory unit.

In some embodiments, the processor 26 is further operable to distinguish one or more sub-portion of the plurality of the fiducial markers 12. For example, one or more data point subsets may be obtained or formed to include an X-axis data point subset, Y-axis data point subset, and Z-axis data point subset. The subset data sets may include a subsection of the data points included in the X-axis, Y-axis, and/or Z-axis data point sets. Generally, the sub-portion may be identified according to one or more fiducial markers 12 that is less than the entire plurality of fiducial markers 12. The sub-portion may be user-selected or predetermined. In additional or alterative embodiments, the processor may be operable to actively and automatically distinguish sub-portions based on one or more predetermined criteria (e.g., movement of one sub-portion relative one or more adjacent sub-portions). In some embodiments, the sub-portions to be distinguished may be variable in size (i.e., can include a variable number of fiducial markers from the overall plurality). The distinguishing of sub-portions of the plurality of the fiducial markers may allow more accurate local measurements to be obtained and compared to global measurements, i.e., measurements across a larger sub-portion or the entire plurality of fiducial markers 12.

In general, any suitable optical scanner 24 which optically identifies fiducial markers 12 in three dimensions may be utilized. In exemplary embodiments, the optical scanner 24 is a non-contact device which utilizes non-contact surface metrology techniques. Further, in exemplary embodiments, an optical scanner 24 in accordance with the present disclosure has a resolution along the X-axis, the Y-axis and the Z-axis of between approximately 1 nanometer and approximately 100 micrometers. Accordingly, and in accordance with exemplary methods, the X-axis data points, Y-axis data points, and Z-axis data points are obtained at resolutions of between approximately 1 nanometer and approximately 100 micrometers.

FIGS. 2, 5, and 6 illustrate various embodiments of an optical scanner 24 in accordance with the present disclosure. For example, FIG. 2 illustrates an embodiment of the optical scanner 24, wherein the scanner is a structured light scanner. Structured light scanners generally emit light 28 from included light-emitting diodes 30 or other suitable light generating apparatus. In exemplary embodiments, the emitted light 28 utilized by a structured light scanner is blue light or white light. In general, the emitted light 28 is projected onto the fiducial markers 12 and component 10 generally in a particular pattern. When the light 28 contacts the fiducial markers 12 and component 10, the surface contour of the component and fiducial markers 12 distorts the light 28. This distortion is captured in an image taken by a camera 32. The image of the light 28 contacting the fiducial markers 12 (and surrounding exterior surface 14) is received by, for example, the processor 26. The processor 26 then calculates X-axis data points, Y-axis data points, and Z-axis data points based on the received images by, for example, comparing the distortions in the light pattern to the expected pattern. Notably, in exemplary embodiments the processor 26 performs and operates such optical scanners 24 to perform various above disclosed steps.

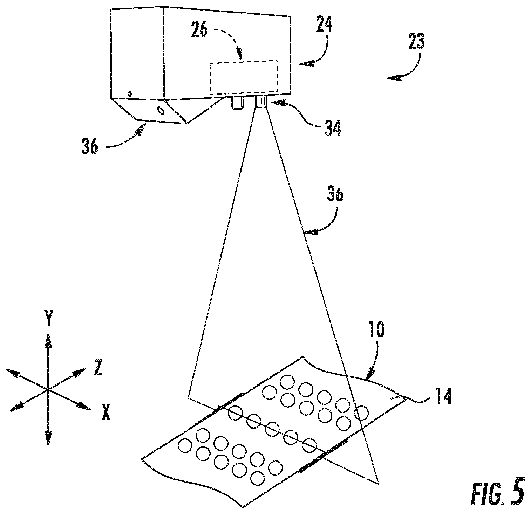

As illustrated in FIG. 5, an optical scanner 24 in some exemplary embodiments is a laser scanner. Laser scanners generally include lasers 34 which emit light 36 in the form of laser beams towards objects, such as in these embodiments, fiducial markers 12 and components 10, generally. The light 36 is then detected by a sensor 38 of the scanner. For example, in some embodiments, the light 36 is then reflected off of surfaces which it contacts, and received by a sensor 38 of the scanner. The round-trip time for the light 36 to reach the sensor 38 is utilized to determine measurements along the various axes. These devices are typically known as time-of-flight devices. In some embodiments, the sensor 38 detects the light 36 on the surface which it contacts, and determines measurements based on the relative location of the light 36 in the field-of-view of the sensor 38. These devices are typically known as triangulation devices. X-axis, Y-axis and Z-axis data points are then calculated based on the detected light, as mentioned. Notably, in exemplary embodiments the processor 26 performs and operates such optical scanners 24 to perform various above-disclosed steps, independently or in combination.

In some embodiments, the light 36 emitted by a laser 34 is emitted in a band which is only wide enough to reflect off a portion of object to be measured, such as a single row of fiducial markers 12. In these embodiments, a stepper motor or other suitable mechanism for moving the laser 34 may be utilized to move the laser 34 and the emitted band as required until light 36 has been reflected off of the entire object to be measured.

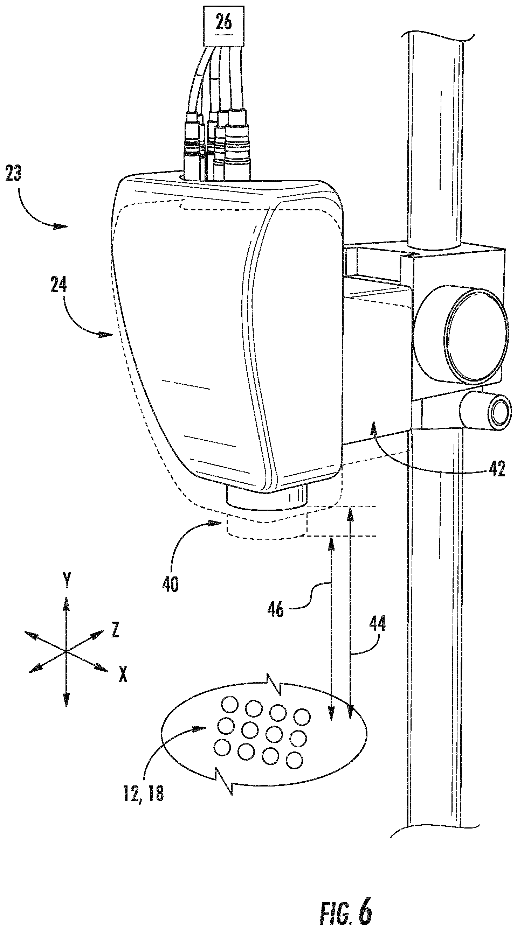

FIG. 6 illustrates another embodiment of an optical scanner 24, wherein the scanner 24 is a microscope. The microscope generally includes a lens assembly 40 which can include one or more lenses, and further includes a stepper motor 42 or other suitable mechanism for moving the lens assembly 40 to various distances 44, 46 from the fiducial markers 12 and exterior surface 14. The lens assembly 40 is generally utilized to magnify images that are visible through the lens assembly 40, as is generally understood. Accordingly, such magnified images may be received, such as by the processor 26, for use in calculating data points. In particular, images may be received at various distances from the fiducial markers 12 and exterior surface 14, such as a first distance 44 and a second distance 46. The stepper motor 42 may operate to step the lens assembly 40 between the various distance 44, 46, which in exemplary embodiments may be between approximately 1 and approximately 1,000 nanometers apart. The images received at the various distances 44, 46 may then be utilized to calculate X-axis data points, Y-axis data points, and Z-axis data points. For example, in each image, various fiducial markers 12 may be in focus while various other fiducial markers 12 may be out of focus. The in focus and out of focus markers 12 vary depending on the distance 44, 46 of the lens assembly 40 from each fiducial marker 12 and exterior surface 14. Accordingly, these portions can be correlated with the distances 44, 46 to obtain, for example, Z-axis data points, while X-axis and Y-axis data points can be conventionally measured. Notably, in exemplary embodiments the processor 26 performs and operates such optical scanners 24 to perform various above disclosed steps.

As mentioned, after the X-axis data point set, Y-axis data point set, and Z-axis data point set are obtained for the fiducial markers 12, a contemporary three-dimensional profile of the fiducial markers 12 may be assembled, such as by the processor 26, based on the X-axis data point set, Y-axis data point set, and Z-axis data point set. For example, the processor 26 may collect the data point sets and output a plot of all data points along relative X-, Y- and Z-axes. The three-dimensional profile may also be made for one or more sub-portion of the fiducial markers 12 according to one or more X-axis subsets, Y-axis subsets, and Z-axis subsets.

In embodiments wherein the fiducial markers 12 are positioned in a predetermined pattern 18, a standardized profile may additionally be provided. The standardized profile may correspond to a reference group of data point sets or subsets. For example, a reference X-axis data point set, Y-axis data point set, and Z-axis data point set. Such embodiments form a standardized three-dimensional profile. The reference sets and/or profile may be based on an ideal or baseline shape for the exterior surface 14 of the component, as well as the fiducial markers 12 of the predetermined pattern. In an exemplary embodiment, the standardized profile is based on a model shape of the component 10 before use.

Further, multiple profiles may be compared, such as by the processor 26. For example, differences in the locations along the X-, Y- and Z-axes of various local or global features of the fiducial markers 12 between multiple profiles may be observed and measured for use in subsequent strain calculations. Further, such strain calculations may be performed. The compared profiles may include multiple contemporary profiles based data sets or subsets obtained at discrete times. Additionally or alternatively, the compared profiles may include one or more standardized profile, including a profile based on a model shape of the component 10.

In some exemplary embodiments, one contemporary profile of fiducial markers 12 is compared to another profile based X-axis data point sets or subsets, Y-axis data point sets or subsets, and Z-axis data point sets or subsets, all obtained at a different time for the component 10. For example, a first contemporary three-dimensional profile may be based on data point sets obtained at a first time, and a second contemporary three-dimensional profile may be based on data point sets obtained at a second time. The first time may occur before use in service in a turbomachine or other operation, or may occur after a certain amount of such operation. The second time may occur after a certain amount of the component's operation and, in exemplary embodiments, after first time has occurred. For example, a first time may be zero, for a newly manufactured component 10, and a second time may occur after a particular period of time of service of the component 10. By measuring the fiducial markers 12 at these varying times, deformation, etc. and resulting strain due to use of the component 10 in service may be calculated. In some embodiments, local strain for a sub-portion of the plurality of fiducial markers 12 may be calculated and distinguished from the global strain calculated for a larger portion plurality of fiducial markers 12.

In additional or alternative exemplary embodiments, one or more contemporary profile of fiducial markers 12 is compared to a standardized profile. The standardized profile may include multiple model data sets similar to the contemporary profile. For instance, the standardized profile of some embodiments includes an X-axis data point set, a Y-axis data point set, and a Z-axis data point set based on a model or ideal shape of the exterior surface 14, or a portion thereof. Data points populate each standardized profile set and may indicate the location where fiducial markers 12 should be positioned before use of the component 10. The standardized profile may be assembled beforehand and/or supplied to the processor 104 from an outside source.

In one exemplary embodiment, a first contemporary three-dimensional profile may be compared to the standardized profile. The first contemporary profile may be based on data point sets obtained at a first time that occurs before use in service in a turbomachine or other operation, or may occur after a certain amount of such operation. Comparison of the standardized profile to a profile at a time that occurs before use of the component may allow defects or deformations in the component 10 to be easily detected. When the standardized profile corresponds to a model shape of the component 10, comparison to a profile for a time that occurs after use may also allow calculation of the resulting strain due to use. In some embodiments, a single standardized profile may be used for multiple discrete components 10 (i.e., multiple units of the same type of component). In such embodiments, the standardized profile may reduce or eliminate the need for storing multiple data sets and/or profiles for identical components. The storage and computing requirements for the processor 26 and/or user may, thereby, be reduced.

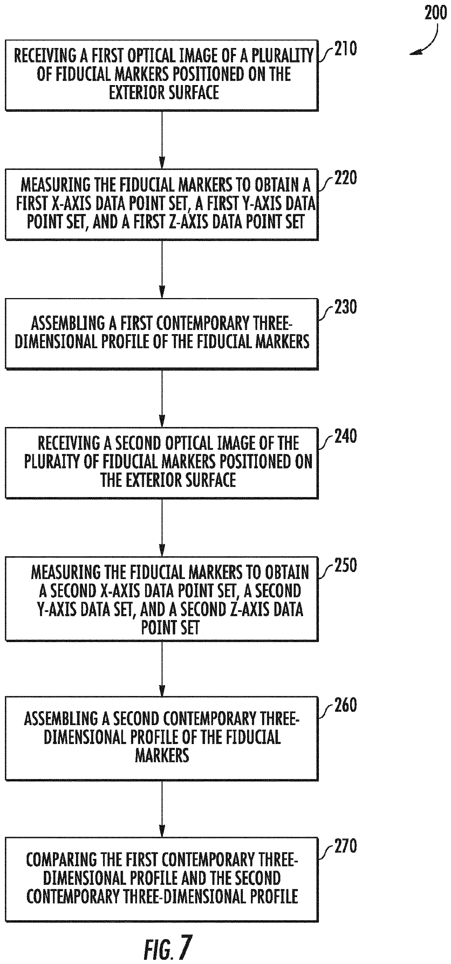

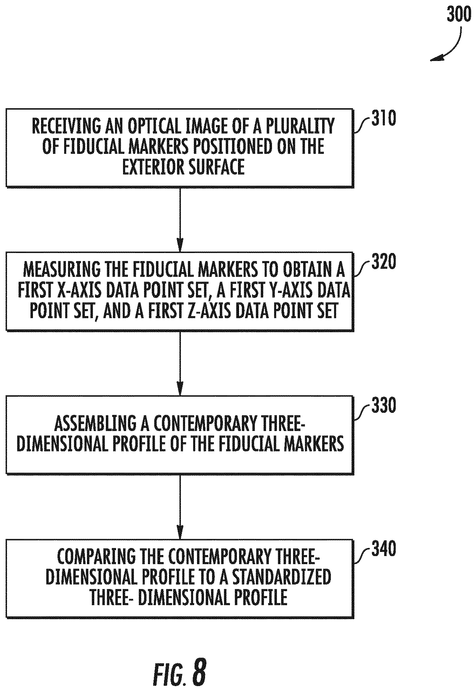

Referring now to FIGS. 7 and 8, the present disclosure is additionally directed to method 200, 300 for monitoring component deformation. Such method 200, 300 in exemplary embodiments may be performed by a processor 26, as discussed above. As shown in FIG. 7, one exemplary method embodiment 200 may include the step 210 of receiving an optical image of a plurality of fiducial markers 12 positioned on the exterior surface 14 of the component 10. Also included is step 220 of measuring the fiducial markers 12 along an X-axis, a Y-axis, and a Z-axis to obtain a first X-axis data point set, a first Y-axis data point set, and a first Z-axis data point set. In some embodiments, the measuring includes calculating X-axis data points, Y-axis data points, and Z-axis data points based on the received images. Optionally, the measuring 220 may include distinguishing one or more sub-portions of the plurality of the fiducial markers 12. In some embodiments, the distinguishing includes obtaining an X-axis data point subset, Y-axis data point subset, and Z-axis data point subset as described above. Further included may be step 230 of assembling a contemporary three-dimensional profile of the fiducial markers 12.

The steps 210 and 220 may occur at a first time, and the three-dimensional profile may be based on the X-axis data point set, Y-axis data point set, and Z-axis data point sets at the first time, as discussed above. Method embodiment 200 may, thus, further include, for example, the steps 240 and 250. Step 240 may include receiving a second optical image of the plurality of fiducial markers 12, while step 250 may include measuring the fiducial markers 12 to obtain a second X-axis data point set, Y-axis data point set, and Z-axis data point set at a second time. Each of the second data point sets may additionally or alternatively comprise one or more corresponding subset for a sub-portion of the plurality of fiducial markers 12. Moreover, the second time may be different from, and in exemplary embodiments after, the first time. Furthermore, the method embodiment 200 may include the step 260 of assembling a second contemporary three-dimension profile based on the second X-axis data point set, Y-axis data point set, and Z-axis data point set. Still further, method embodiment 200 may include the step 270 of comparing the first three-dimensional profile and the second three-dimensional profile, as discussed above.

As shown in FIG. 8, an additional or alternative method embodiment 300 may include step 310 of receiving an optical image of a plurality of fiducial markers 12 positioned on the exterior surface 14 of the component 10. Also included is step 320 of measuring the fiducial markers 12 along an X-axis, a Y-axis, and a Z-axis to obtain an X-axis data point set, a Y-axis data point set, and a Z-axis data point set. Measuring may include calculating X-axis data points, Y-axis data points, and Z-axis data points based on the received images. Optionally, the measuring 320 may include distinguishing one or more sub-portions of the plurality of the fiducial markers 12. In some embodiments, the distinguishing includes obtaining an X-axis data point subset, Y-axis data point subset, and Z-axis data point subset as described above. Further included may be step 330 of assembling a contemporary three-dimensional profile of the fiducial markers 12. Still further included in the method embodiment 300 may be step 340 of comparing the contemporary three dimensional profile to a standardized profile, as discussed above.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following clauses:
1. A system for monitoring a component, the system comprising:
   a plurality of fiducial markers positioned on an exterior surface of the component;
   an optical scanner for analyzing the fiducial markers; and
   a processor in operable communication with the optical scanner, the processor operable for measuring the fiducial markers along an X-axis, a Y-axis, and a Z-axis to obtain an X-axis data point set, a Y-axis data point set, and a Z-axis data point set, wherein the X-axis, the Y-axis, and the Z-axis are mutually orthogonal.
2. The system of clause 1, wherein the processor is further operable for and assembling a contemporary three-dimensional profile of the fiducial markers based on the X-axis data point set, the Y-axis data point set, and the Z-axis data point set.
3. The system of clause 1, wherein the fiducial markers each comprise a yttria-stabilized zirconia.
4. The system of clause 1, wherein the fiducial markers are positioned in a thermal barrier coating.
5. The system of clause 2, wherein the fiducial markers are positioned in a predetermined reference pattern.
6. The system of clause 5, wherein the reference pattern corresponds to a standardized profile.
7. The system of clause 6, wherein the processor is further operable for comparing the contemporary three-dimensional profile to the standardized profile.
8. The system of clause 1, wherein the component is a turbine component.
9. The system of clause 8, wherein each fiducial marker has a diameter between 5 micrometers and 5 millimeters.
10. The system of clause 2, wherein the optical scanner comprises a structured light scanner.
11. The system of clause 10, wherein the structured light is blue light.
12. The system of clause 10, wherein the structured light is white light.
13. The system of clause 1, wherein the processor is further for operable for distinguishing a sub-portion of the plurality of fiducial markers.
14. A method for monitoring a component, the component having an exterior surface, the method comprising:
   receiving an optical image of a plurality of fiducial markers positioned on the exterior surface; and
   measuring the fiducial markers along an X-axis, a Y-axis, and a Z-axis to obtain a first X-axis data point set, a first Y-axis data point set, and a first Z-axis data point set, wherein the X-axis, the Y-axis, and the Z-axis are mutually orthogonal.
15. The method of clause 14, wherein the measuring comprises calculating X-axis data points, Y-axis data points, and Z-axis data points based on the received images.
16. The method of clause 14, wherein the measuring includes distinguishing a sub-portion of the fiducial markers within the plurality of fiducial markers to obtain an X-axis data point subset, a Y-axis data point subset, and a Z-axis data point subset.
17. The method of clause 14, further comprising assembling a first contemporary three-dimensional profile of the fiducial markers based on the X-axis data point set, the Y-axis data point set, and the Z-axis data point set.
18. The method of clause 17, wherein the receiving and measuring steps occur at a first time, and the method further comprises:
   receiving another optical image of a plurality of fiducial markers positioned on the exterior surface;
   measuring the fiducial markers along the X-axis, the Y-axis, and the Z-axis at a second time to obtain a second X-axis data point set, a second Y-axis data point set, and a second Z-axis data point set, and
   assembling a second contemporary three-dimensional profile of the fiducial markers based on the second X-axis data point set, the second Y-axis data point set, and the second Z-axis data point set
19. The method of clause 18, further comprising comparing the first contemporary three-dimensional profile and the second contemporary three-dimensional profile.
20. The method of clause 17, further comprising comparing the first contemporary three-dimensional profile to a standardized profile.

## Claims

1. A system (23) for monitoring a component (10), the system (23) comprising:
a plurality of fiducial markers (12) positioned on an exterior surface (14) of the component (10);
an optical scanner (24) for analyzing the fiducial markers (12); and
a processor (24) in operable communication with the optical scanner (24), the processor (24) operable for measuring the fiducial markers (12) along an X-axis, a Y-axis, and a Z-axis to obtain an X-axis data point set, a Y-axis data point set, and a Z-axis data point set, wherein the X-axis, the Y-axis, and the Z-axis are mutually orthogonal.

2. The system (23) of claim 1, wherein the processor (24) is further operable for and assembling a contemporary three-dimensional profile of the fiducial markers (12) based on the X-axis data point set, the Y-axis data point set, and the Z-axis data point set.

3. The system (23) of claim 1, wherein the fiducial markers (12) are positioned in a thermal barrier coating (16).

4. The system (23) of claim 2, wherein the fiducial markers (12) are positioned in a predetermined reference pattern (18).

5. The system (23) of claim 4, wherein the reference pattern (18) corresponds to a standardized profile.

6. The system (23) of claim 5, wherein the processor (24) is further operable for comparing the contemporary three-dimensional profile to the standardized profile.

7. The system (23) of claim 1, wherein the component (10) is a turbine component (10).

8. The system (23) of claim 2, wherein the optical scanner (24) comprises a structured light scanner.

9. The system (23) of claim 1, wherein the processor (24) is further for operable for distinguishing a sub-portion of the plurality of fiducial markers (12).

10. A method for monitoring a component (10), the component (10) having an exterior surface (14), the method comprising:
receiving an optical image of a plurality of fiducial markers (12) positioned on the exterior surface (14); and
measuring the fiducial markers (12) along an X-axis, a Y-axis, and a Z-axis to obtain a first X-axis data point set, a first Y-axis data point set, and a first Z-axis data point set, wherein the X-axis, the Y-axis, and the Z-axis are mutually orthogonal.

11. The method of claim 10, wherein the measuring includes distinguishing a sub-portion of the fiducial markers (12) within the plurality of fiducial markers (12) to obtain an X-axis data point subset, a Y-axis data point subset, and a Z-axis data point subset.

12. The method of claim 10, further comprising assembling a first contemporary three-dimensional profile of the fiducial markers (12) based on the X-axis data point set, the Y-axis data point set, and the Z-axis data point set.

13. The method of claim 12, wherein the receiving and measuring steps occur at a first time, and the method further comprises:
receiving another optical image of a plurality of fiducial markers (12) positioned on the exterior surface (14);
measuring the fiducial markers (12) along the X-axis, the Y-axis, and the Z-axis at a second time to obtain a second X-axis data point set, a second Y-axis data point set, and a second Z-axis data point set, and
assembling a second contemporary three-dimensional profile of the fiducial markers (12) based on the second X-axis data point set, the second Y-axis data point set, and the second Z-axis data point set

14. The method of claim 13, further comprising comparing the first contemporary three-dimensional profile and the second contemporary three-dimensional profile.

15. The method of claim 12, further comprising comparing the first contemporary three-dimensional profile to a standardized profile.
